# EUROPEAN PATENT APPLICATION

(11) **EP 2 051 198 A1**
(43) Date of publication of application: **22.04.2009**
(21) Application number: 07118783.5
(22) Date of filing: 18.10.2007
(51) Int. Cl.: G06Q 30/00, G06F 17/30, H04L 12/28, H04L 29/06, H04L 29/08

(54) **System and method for embedding content in web pages distributed by a wireless access point**

(71) Applicant: Deutsche Telekom AG, 53113 Bonn (DE); Technische Universität Berlin, 10623 Berlin (DE)
(72) Inventor: Solarski, Marcin, 10553 Berlin (DE); Vidales, Pablo, 10437 Berlin (DE); Zerfos, Petros, New York, NY 10128 (US); Singh, Jatinder Pal, Mountain View, CA 94040 (US)
(74) Representative: Vossius & Partner

(57) **Abstract**

The present invention relates to a computer system and a method for inserting or merging additional or supplementary contents into the web contents retrieved by a user connected over a Wireless Access Point (WAP) to the Internet. The broadband access can be provisioned by an Internet Service Provider (ISP) via any wired or wireless access technology, for instance, DSL, cable connections, optical fibre, or WiMax. The WAP can be a standalone apparatus, or it can be in- built in an Internet connectivity apparatus like a DSL or cable modem located in an ISP user's premises, henceforth the Customer Premises Equipment (CPE).
In sum, the present invention allows the CPE to embed selective contents based on user activity and location into the web pages requested by a mobile user. This is done by caching the web pages in the CPE using a transparent proxy, embedding the contents retrieved from a content provider, and distributing them to the user.

## Description

### Field of the invention

The present invention relates to a computer system and a method inserting or merging additional or supplementary contents into the web contents retrieved by a user connected over a Wireless Access Points (WAP) to the Internet. The broadband access can be provisioned by an Internet Service Provider (ISP) via any wired or wireless access technology, for instance, DSL, cable connections, optical fibre, or WiMax. The WAP can be a standalone apparatus, or it can be inbuilt in an Internet connectivity apparatus like a DSL or cable modem located in an ISP user's premises, henceforth the Customer Premises Equipment (CPE).

### Background of the invention

A system and method for distributing advertisements is presented in "System and method for targeting and distributing advertisements over a distributed network", US-A-6 119 098. The distribution of the advertisement is managed by a central server that hosts an advertisement database and provides advertisements to the user's computer. Advertisements are selected based on the personal profile of the targeted user only. The client periodically accesses the server over a distributed information network to download targeted advertisements. The client computer preferably displays the advertisements in an advertisement window that is continuously displayed in the user's terminal. The advertisement window is sensitive to mouse and/or keyboard activity, even if other applications are currently running in the user's computer.

A method and system to distribute customized advertising using the Internet is described in "Method and system for presenting customized advertising to a user on the world wide web", US-A-6 009 410. US-A-6 009 410 describes the use of an advertisement repository connected to the World Wide Web (WWW) that can be accessed by registered users. When the user accesses the repository through the browser, an advertising page is dynamically configured for that particular user based on a previously provided user profile. In addition, part of the customized page can be dynamically configured on a context dependent basis determined from the particular web sites that the user has accessed. US-A-6 009 410 describes the concept of context aware advertisements based on user activity related to the visited web sites.

The system and method presented in "System and method for public wireless network access subsidized by dynamic display advertising", US-A-7 062 469, includes a mobile device (wireless device) component and a local area network. The mobile device requests access to the local area network from a node, e.g., a hub, on the network. The mobile node sends, as part of the access request, information that includes identification and demographic information about the user of the mobile device to the hub. This information is sent from the hub to an advertising server, which sends back commercial messages from the server that are selected with regards to the demographic information. The hub sends the commercial messages to a display where they are displayed at the current location of the user for viewing. This invention is directly related to systems and methods for public wireless access subsidized by advertising that includes a mobile device at the location where advertisements are displayed, e.g. shop. When a user connects to the Internet, the user sends demographic information to the hub. Then, the hub sends this information and user's location to a central advertising server.

The work described in "System and method for providing targeted messages based on wireless mobile location", patent number US-A-6 647 257, provides a system and method for inserting messages, in particular commercial information or advertisements into a wireless mobile communication system. The messages are targeted to the user so that the following characteristics are considered: the location of the terminal at the time of the wireless mobile communication, demographic and personal preference data pertaining to the user, responses made to the messages previously provided to the user; or the historical movement patterns of the user. The invention refers to mobile communication systems, where the mobile device has an associated user identification code, common in cellular networks. The invention also assumes that other information required to select advertisement is available from the user's mobile terminal. The invention uses the user identification code to determine a predefined user profile stored in a conventional data storage unit.

A method of using a transparent web proxy, e.g., CISCO and Bluecoat, is described in a commercial solution offer by Adzilla New Media www.adzilla.com (Adzilla New Media, "Adzilla ISP white paper", http://www.adzilla.com/03_whitepapers.html). The solution is called Zillacaster and uses a commercial proxy server to cache web pages requested by an ISP user and embed information such as advertisements into the requested web pages. The solution is transparent to the user as Zillacaster uses a proxy server located in the ISP premises.

### Summary of the invention

The present invention is specified by the features of the claims.

The present invention allows the CPE to monitor the activity of a mobile user, and selectively send this information to the ISP providing the broadband access connectivity. To accomplish this, the CPE sends a data bundle formed by user's activity information and a unique identifier of the CPE. This data bundle is used by a central backend server to which the CPE connects, to query selective additional content, for example advertisements or messages, from a content provider. The queried additional content (e.g., advertisements) are selected according to the user context, including the contents of web pages visited by the user (user's activity) and the user's location that is derived from the unique identifier sent by the CPE in the data bundle. The retrieved contents are sent from the backend server to the CPE that embeds these into the corresponding web pages, which were requested by the mobile user. The web pages with the embedded contents are then delivered to the mobile user. In sum, the present invention allows the CPE to embed selective contents based on user activity and location into the web pages requested by a mobile user. This is done by caching the web pages in the CPE using a transparent proxy, embedding the contents retrieved from a content provider, and distributing them to the user. The transparent proxy resides in the CPE and it is the one responsible for caching the requested web pages and embedding the contents.

### Client (CPE) functionality

The CPE has the following functionality to support the selection and embedding of advertisements.
- **User activity monitoring** allows the monitoring of user's activity by capturing incoming HTTP packets from an associated mobile terminal and extracting the relevant URL information.
- **Web page caching** allows caching of the web pages requested by a user using a wireless terminal. The web pages are sent to the CPE from a backend server.
- **Embedding method** allows embedding selected advertisements into the incoming web pages and displaying the web pages with the embedded content in the user's mobile terminal.

### User activity monitoring

It is a service, henceforth the URL monitor, which resides in the CPE and starts when the CPE boots up. The URL monitor implements the support for embedding customized advertisements based on user's activity. The URL monitor collects HTTP packets in order to extract data related to the web pages requested by a user. This process also supports sending the collected information to a backend server. URL monitor only starts when the CPE is connected to the Internet via the establishment of a connection using the PPP over Ethernet (PPPoE) protocol. The way the process works is described hereunder:
- The CPE starts and establishes a connection to an ISP using the PPPoE protocol.
- The URL monitor process that runs in the CPE starts collecting information about the user's activity after it checks that a PPPoE connection has been established. In the case that the PPPoE connection goes down, the service stops and is inactive until the connection is established again.
- The URL monitor starts capturing HTTP packets or packets that have port 80 as destination port and that originated from the user's mobile terminal.
- The URL monitor scans packets for certain protocol tags called HTTP verbs such as GET, POST, or HEAD, and it collects the URL information contained in the packets that match.
- URL monitor forms a XML message and sends the collected URLs and the originating mobile terminal's IP address to the backend server periodically. (Alternatively, message exchange may be performed based on text files (proprietary format), or using any other communication protocol.

In the following, the URL monitor is described in detail. This process resides in the CPE and it is responsible for capturing HTTP requests and extracting the URL information that expresses the user's activity, for example: visited web pages, requested web pages, etc. This data is used together with the user's location, to select advertisements that are then embedded into a web page requested by the user. The URL information is obtained by capturing packets from a TCP connection that has port 80 assigned as destination port. This is how user web page requests can be differentiated from other types of traffic using the same TCP protocol, e.g., file transfer, downloading files, etc. The URL information is extracted from the captured packets and this data is sent to the backed server using XML messages.

The URL information extracted from the collected HTTP requests is stored in the CPE. When a number of URLs have been saved (this number can be configured according to the actual traffic load in the CPE of the user's activity) the URLs are inserted in an XML post and sent to the backend server. As part of the present invention, a XML format has been defined to communicate this data between the CPE and the backend.
The XML format is shown here.

```
 <xml>
  <adurls>
   <item>
    <host>XXX.XXX.XXX.XXX</host>
    <url>http://www.sample-domain.com/</url>
   </item>
   <item>
    <host> XXX.XXX.XXX.XXX </host>
    <url>http://www.sample-domain.com/</url>
   </item>
  </adurls>
 </xml>
```

If the backend server is not reachable by the CPE when the latter likes to send a post, then the collected URLs and the XML post itself are discarded. However, the CPE continues collecting user activity information via the URL monitor. In this way, the backend server will receive user activity data from the CPE as soon as the connection between these two system components is restored.

In addition, the URL monitor preferably implements three commands to be remotely managed by the backend server, based on the TR-069 standard (DSL Home Technical Group, "DSL

Forum TR-069 CPE WAN Management Protocol", Technical Report, May 2004). These commands are:
- **PostURL (obligatory):** This command sets or gets the configuration parameter that contains the URL to post the XML message containing the user activity information. This parameter can be set from the backend server and it is needed for the CPE to know where to send the XML messages.
- **Cut (optional):** This command control the -c option of the URL monitor configuration parameters. It controls the option to collect complete URLs or a subpart of the URL remotely.
- **Delay (optional):** The time period between XML messages sent by the CPE can be configured from the backend server. The default value is 10 seconds, meaning that the CPE will send a XML message containing the information about the user's activity every 10 seconds.

### Web page caching

The web page caching is done using a transparent proxy server that resides in the CPE, e.g., tinyproxy (see, e.g., http://tinyproxy.sourceforge.net/). The proxy server used must be fully compatible with all existing web browsers as the embedding of advertisement should be transparent to the users. The proxy server that resides in the CPE allows the CPE to cache web pages requested by a user from a mobile terminal. In addition to web page caching, the present invention proposes a method to support the embedding of advertisements that can be treated as an extension of the proxy server. This method should include two main features:
- **Parsing cached web pages** that are requested by a user using a mobile terminal. The mobile terminal is connected to the CPE and when a user requests a web page by sending a HTTP request, the proxy server caches and parses the incoming data packets from the ISP to locate the place in the HTML code where the advertisement information should be inserted.
- **Embedding of the advertisement information** after locating the insertion point in the parsed HTML code. The proxy server locates the place in the HTML code where the advertisement information should be inserted using a parsing method. The proxy server is transparent to the user, meaning that the original HTML code of the web page retrieved should not be modified. However, the advertisement should be inserted at the appropriate place in the code to ensure that the advertisement will not be covered by any pre-existent element of the web page. Therefore, only the embedded advertisement information is added to the HTML code and the correspondent modifications done, like adjusting the content length value in the HTTP header.

### Embedding method

This aspect of the invention relates to the locating of the insertion place for embedding advertisements in web pages by parsing the HTML code. In particular, the invention encompasses to parse the cached web pages (HTML code) in order to locate the point to insert the embedded advertisements' information. This method is preferably implemented as an extension to the proxy server running in the backend server. To embed advertisements into web pages requested by a user and make them visible to the user, it is necessary to identify the visible part of the web page in the HTML code. The visible part of the HMTL code is identified by the HTML tags <body> and </body>. All the elements (e.g., photo, video, text, etc) that are between these opening and closing tags are displayed in the user's browser. Therefore, the code for the embedded advertisements should be inserted between these two HTML tags.

After identifying the visible portion of the HTML code, the advertisement information should be embedded immediately after the opening tag of the visible part of HTML code, i.e. after the tag <body>. The HTML code to be embedded originates in the backend server. This position in the code is determined as follows: the parsing method compares each substring of the HTML code to the partial tags <BO, <Bo, <bO or <bo. The reason to look for these partial tags is that there is no other HTML tag that starts with the character sequence Bo, and as some operating systems are case sensitive, it is required to search for all possible combinations of lower and upper cases. As soon as one of these tags in found, the > closing sign is preferably identified. It is needed to look for the closing tag symbol > because other tags (character string) can be placed in between the opening and closing tag symbols (< and >). After detecting these two character sequences, the code to embed advertisement information should be inserted and the code length should be modified, considering the advertisement code insertion, in the corresponding HTTP header.

The present invention embodies three methods for embedding advertisements into the web pages: inline frame, container, and content wrapping. For the first two, the corresponding code should be inserted after the body tag and before the rest of the original HTML code, for example <BODY> [sample embedded advertisement code] [rest of page's HTML code] </BODY>. The first method, the inline frame method, requires a link (URL) to the web page that includes the selected advertisement to be displayed in the user's terminal. For the second case, container, this embedding method allows to include the complete advertisement elements, and not only an URL to the element.

For the third case, content wrapping, the parsing method should additionally detect the closing tag </BO, </Bo, </bO or </bo. The definition of these four keywords follows the same principles as for the opening tags. Only then, it is possible to separate the visible content of the original web page and the advertisement, providing also visual separation in the browser screen. The embodiment of the third method, content wrapping, inserts two containers: one for the advertisement and another one for the original page. These two containers are totally separated, logically and visually. The embedding method proceeds as follows: <BODY> [sample embedded content wrapping code] [rest of page's HTML code] [sample embedded content wrapping code] </BODY>.

The last step is to modify the HTTP header and insert the new value for code length. The generated page with the original HTML code plus the inserted code for embedded advertisements is then sent to the user. The embedded advertisements are visible in the browser installed in the user's terminal and the original web page HTML code is not modified; all original elements of the web page requested by the user are also part of the generated HTML code.

### Backend server functionality

The backend server implements the following functionality to support embedding advertisements:
- Service to receive user activity information from the CPE
- Service to get CPE location information, and derive user location.
- Service to merge user activity information with user location information, and send these to a content provider in order to get customized advertisements.
- Service to send advertisement information to the CPE for embedding this information into a web page requested by a user.

The aforementioned tasks are implemented in the backend server by a process, henceforth the Advertisement controller. The backend server receives the user activity information in the form of a XML message that is posted by the CPE. The message includes URLs and correspondent host IP address, related to the user's activity. The communication between the backend server and the CPE is performed by the Advertisement controller that sends messages to the URL monitor, located in the CPE. To enable the communication between these two processes, the CPE has all the credentials required to contact and authenticate with the backend server. In the same way, the backend server can contact the CPE to configure and control the URL monitor process that supports the functionality for embedding advertisements in the CPE side. The Advertisement controller implements the following remote management commands (based on the TR-069 standard) to configure and control the URL monitor process: PostURL to set/get the URL to which the CPE post XML messages; cut to collect complete URLs or only the domain part of them; delay to determine how often to receive messages form the CPE about user's activity.

The present invention differs from conventional approaches such as suggested in US-A-6 119 098 in the following. The system suggested in US-A-6 119 098 is that a central server stores the advertisements in a central database whereas the present invention does not store any content. On the contrary, the present invention collaborates with advertisement providers and the backend server of the present invention sends a query with the integrated information about user's location and activity to a content provider that responds to the query by sending the selected advertisements. Furthermore, US-A-6 119 098 assumes a distributed information network via which users connect to the central servers. The present invention address the scenario of a distributed wireless network that consists of a group of CPEs that implement the method for embedding advertisements, and to which users with wireless terminals connect in order to access the Internet. US-A-6 119 098 selects advertisements based on user profiles that are previously provided by the users. The present invention uses user's activity information and location to select the advertisements that is collected automatically as the user accesses the Internet. Finally, US-A-6 119 098 assumes that the advertisements are displayed in an advertisement window hosted by the user's terminal whereas the present invention displays advertisements by embedding them in the web pages requested by the users using a transparent web proxy to cache requested pages and insert the required advertisement information. Thus, the method and system of the present invention while elucidating the distribution of advertisement matching the user activity and localization as well as, using a distributed approach, differs significantly from the system suggested in US-A-6 119 098.

The present invention differs from the system described in US-A-6 009 410 in the same aspects previously indicated. Furthermore, US-A-6 009 410 suggests modification to the browser running in the user's terminal in order to collect information about previous visited web sites. The present invention collects information about the user's activity without modifications to the browser running in the user's terminal. The collection of the user's activity information is performed in a transparent and distributed fashion by each CPE.

The present invention encompasses that the hub (or CPE) is the one to monitor user's activity and to send this information to a central server. The user does not actively send information to the hub; on the contrary, the hub monitors user's activity. Moreover, the information about the user's location is added to the user's activity in the backend server, which has the location information of all CPEs that may be part of the overall broadband access system. This knowledge is stored in a database with the geographical information of the CPEs. This is in contrast to the aforementioned US-A-7 062 469. One more difference between US-A-7 062 469 and the present invention is that the advertisements are displayed in the user's terminal in a displaying window. On the contrary, the present invention describes a method to embed advertisement in the web pages requested by users. Although US-A-7 062 469 refers to the distribution of advertisements based on the communication between a hub and a user using a wireless distribution network, the present invention differs from the described work in at least the following aspects: the method to get the information about the user, the information use to select the advertisements, and the method to display the advertisement to the users.

In contrast to the disclosure in US-A-6 647 257, the present invention does not assume any predefined information from users and the method to select and embed advertisements applies to any mobile terminal. Moreover, the present invention differs from US-A-6 647 257 in all the aforementioned aspects. Although US-A-6 647 257 eludes the concept of customized advertisements distributed through a wireless mobile network, the present invention is substantially different therefrom.

Finally, in contrast to the Zillacaster solution explained above, the present invention assumes that the proxy server resides in the CPE, managing to distribute the caching load and eliminating potential overloading of the ISP core network components. Moreover, it is mentioned with respect to Zillacaster that the content selection is done on the basis of user profile, and not performing user activity monitoring as it is proposed in the present invention. Although Zillacaster eludes the concept of inserting advertisement code into the requested cached web pages, it differs from the present invention in at least the aforementioned aspects.

### Brief Description of the Drawings

- Fig. 1: shows an exemplary scenario in accordance with a preferred embodiment of the invention that includes a CPE that implements the embedding method, and mobile users connected to the CPE in order to obtain wireless Internet connectivity. This Figure shows the case in which the present invention could be deployed;
- Fig. 2: shows the communication between the mobile terminal and the backend server via the CPE, in accordance with a preferred embodiment of the invention;
- Fig.: 3 describes the method implemented by the URL monitor to collect information about user activity from those users connected to the CPE, in accordance with a preferred embodiment of the invention;
- Fig. 4: shows the method to parse the cached web pages (HTML code) in order to locate the point to insert the embedded advertisements' information, in accordance with a preferred embodiment of the invention; and
- Fig. 5: shows the method to support embedding advertisements implemented in the backend side, or server side.

### Detailed description of the invention

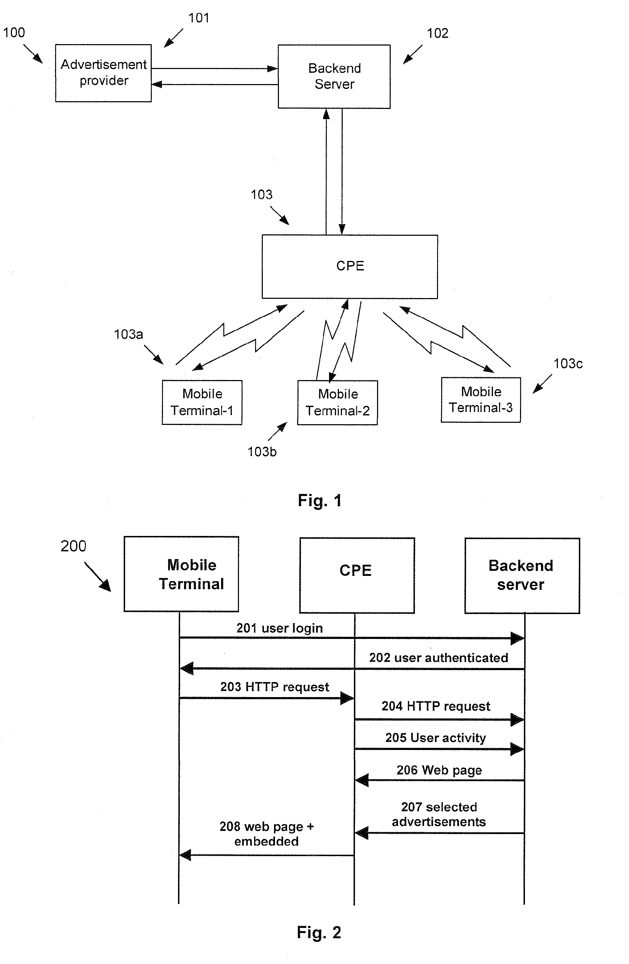

Fig. 1 is a system diagram for embedding advertisement functionality (the communication among system components is depicted with arrows). In particular, Fig. 1 shows an exemplary scenario 100 that includes a CPE that implements the embedding method 103, and mobile users connected to the CPE in order to obtain wireless Internet connectivity. The CPE retrieves web pages requested by mobile terminals (MT) 103a, 103b, and 103c. A representative ISP provides broadband access to the MTs via the CPE. The ISP has a backend server that implements the support for the embedding method 102 that connects to the CPE using a wired technology, e.g., DSL or cable. An exemplary advertisement provider 101 responds to the ISP requests for advertisements.

The system, indicated generally in Fig. 1, comprises at least a DSL router, for example, with a wireless interface, hereafter the CPE 103; a backend server that can communicate with the distribution network formed by CPEs, and with a particular content provider 102; a mobile terminal that is used by a user to connect to the Internet via the CPE 103a, 103b, 103c; and a content provider that can communicate with the backend server to supply the customized advertisements for embedding 101.

Fig. 2 shows sequence diagrams of the system and method for embedding advertisements. The communication between the three main components of the system is shown in this diagram. Fig. 2 shows the communication between the mobile terminal and the backed server via the CPE, regarding embedding advertisement support. A mobile user sends an access request to the backend server (user login 201) and waits for the corresponding response from the backend server. After the authentication process, the backend server sends a response (user authenticated 202) to the mobile terminal. After this message exchange, the mobile user is granted access to the Internet and the URL monitor starts collecting information about the user's activity. The user starts accessing web pages and generates a HTTP request 203 to retrieve web pages. All the requests pass through the CPE, and the URL monitor collects relevant information from these packets, for example a selected URL, and then forwards the HTTP to the backend server 204. Thus, as soon as the backend server grants access to the user, the CPE starts monitoring user activity and collecting relevant data. Periodically, the collected User activity 205 is sent from the CPE to the backend server using a proprietary format described above. The backend server replies to the HTTP request with the correspondent web page 206 and sends the advertisements selected based on user activity to the CPE 207. Finally, the web pages containing the embedded advertisement information are sent from the CPE to the user 208. In more detail, the backend server receives the user activity information, adds the CPE location and formulates a request for the content provider; the content provider selects the customized advertisements from its content database based on the information sent by the backend server, and delivers the correspondent advertisements; (207) the backend server prepares the advertisement data received from the content provider and sends it to the CPE for embedding into the web pages; (208) the CPE embeds advertisements into web pages and distributes the original web page plus embedded advertisements to the user that generated the HTTP request.

In the preferred embodiment of this invention, the CPE is located at the premises of a DSL user. Furthermore, the CPE is capable of enabling secure and controlled broadband access sharing as described in M. Solarski, P. Vidales, O. Schneider, P. Zerfos, and J. Singh, An Experimental Evaluation of Urban Networking using IEEE 802.11 Technology. In Proceedings of the 1 st IEEE Workshop on Operator-Assisted (Wireless Mesh) Community Networks (OpComm 2006), September 2006. Third-party mobile users can request access to the CPE and the later forwards the access request to a backend server. The backend server is preferably located at the ISP premises. The CPE should implement at least three main methods: User activity monitoring, web page caching, and embedding method.

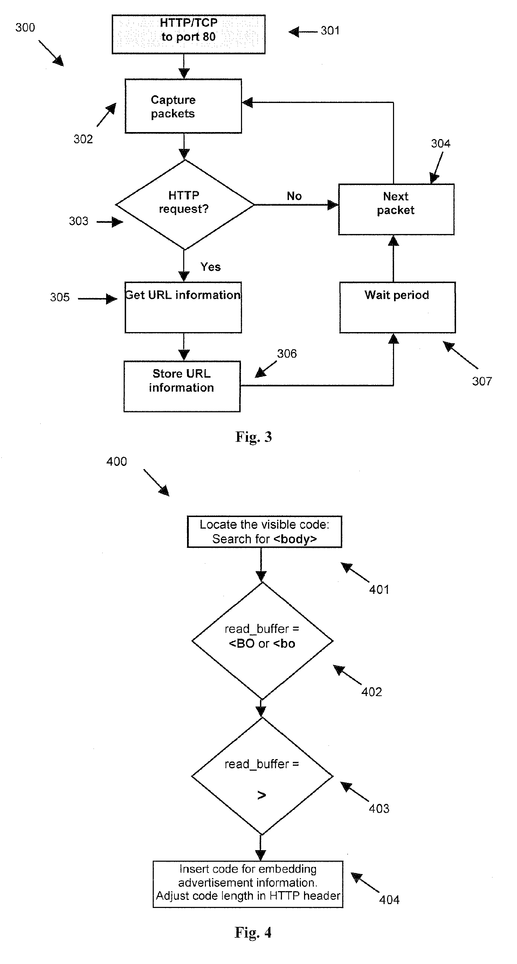

Fig. 3 is a diagram to describe the method implemented by the URL monitor 300 located in the CPE and responsible for collecting URL information relevant to user's activity. The packets sent from the mobile terminal to the backend server are collected when the destination port of these is TCP port 80 (step 301). After collecting the packet that fulfils this condition (step 302), the packet content is parsed to search for HTTP verbs and filters HTTP/TCP request packets exclusively (step 303). This condition means that the TCP packets with port 80 as the destination port that do not contain any HTTP verbs are not processed further, as these do not contain relevant URL information. The URL monitor discards such a packet and process the next one (step 304) that was collected in the previous step 302.

In the case where the packet contains one of the mentioned HTTP verbs, the packet is processed further. In the next step, the URL information is extracted from packets that are, at this point, HTTP requests (step 305). The URL information is saved in the CPE for future delivery to the backend server (step 306). After the URL information has been collected, the CPE waits for a certain period of time before collecting the next URL information (step 307). The duration of this waiting period can be changed according to the actual web traffic load in the CPE or to the user's activity. This waiting period has two purposes: ignore additional elements loaded in a requested main web page and avoiding duplicated URLs. After the waiting period, the URL monitor processes the next packet, repeating the method described here.

Fig. 4 shows a method to locate the insertion place for embedding advertisements in web pages by parsing the HTML code. In particular, Fig. 4 shows the method to parse the cached web pages (HTML code) in order to locate the point to insert the embedded advertisements' information 400. This method is preferably implemented as an extension to the proxy server running in the backend server. To embed advertisements into web pages requested by a user and make them visible to the user, it is necessary to identify the visible part of the web page in the HTML code. The visible part of the HMTL code is identified by the HTML tags <body> and </body> (step 401). All the elements (e.g., photo, video, text, etc) that are between these opening and closing tags are displayed in the user's browser. Therefore, the code for the embedded advertisements should be inserted between these two HTML tags.

After identifying the visible portion of the HTML code, the advertisement information should be embedded immediately after the opening tag of the visible part of HTML code, i.e. after the tag <body>. The HTML code to be embedded originates in the backend server based on the method show in Figure 4. This position in the code is determined as follows: the parsing method compares each substring of the HTML code to the partial tags <BO, <Bo, <bO or <bo (step 402). The reason to look for these partial tags is that there is no other HTML tag that starts with the character sequence Bo, and as some operating systems are case sensitive, it is required to search for all possible combinations of lower and upper cases. As soon as one of these tags in found, the > closing sign should be identified (step 403). It is needed to look for the closing tag symbol > because other tags (character string) can be placed in between the opening and closing tag symbols (< and >). After detecting these two character sequences, the code to embed advertisement information should be inserted and the code length should be modified, considering the advertisement code insertion, in the corresponding HTTP header (step 404).

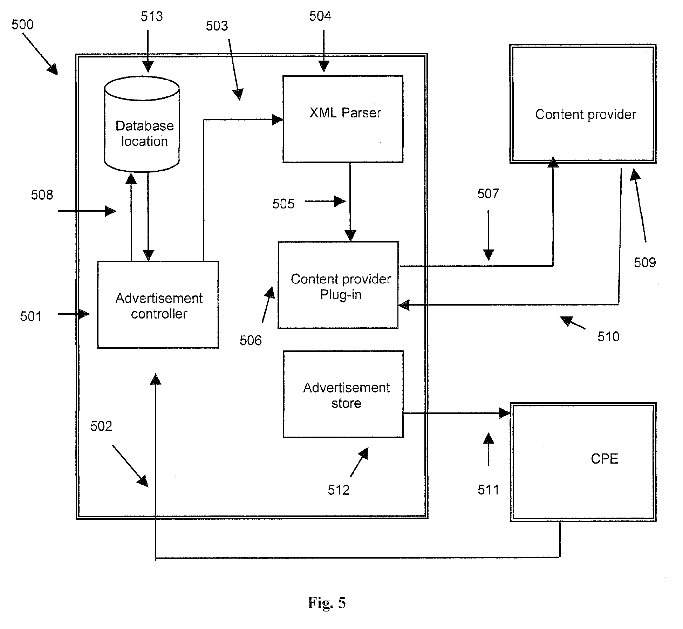

Fig. 5 shows a method to receive user activity from CPE, query content provider (adding CPE location), parsing received advertisements, and sending advertisement data to the CPE to be embedded. In particular, Fig. 5 shows the method to support embedding advertisements implemented in the backend side 500. The Advertisement controller 501 receives the XML messages with the user activity coming from the CPE 502 invoking the method "Do get". Then, the Advertisement controller parses the XML message using a XML parser 504 that could be part of the Advertisement controller 501 invoking the method "Process request" 503. The output of this parser 505 is the URLs and host IP addresses that were included in the XML message by the URL monitor from the CPE.

The backend implements a method to retrieve location data related to the CPE that sends the XML messages 508. This information could be stored in a data repository 513 accessible from the backend server. The CPE location together with URLs and host IP addresses are passed 507 to the content provider in a specific format that depends on the latter, e.g., Google Adsense query format 505. The content provider 509 responds to the query with a message that contains the selected advertisements 510. Therefore, a method to parse the information from the content 506 needs to be implemented in the backend server, and this method also depends on the specific format detailed by the content provider.

The Advertisement controller parses the complete HTML code retrieved from the content provider 506. The Advertisement controller stores the customized advertisements information in a data structure, henceforth the Advertisement store 512. The backend server sends the Advertisements store structure to the CPE 511 for embedding the data into the cached web page.

The user for example connects to the Internet via the CPE using a mobile terminal with an installed browser, e.g. Microsoft Explorer. When the user connects to the Internet, a PPPoE connection is established between the CPE and the backend server. The CPE detects that a PPPoE connection has been established for the particular user and it starts monitoring user activity. In this particular embodiment, the CPE is an embedded system that runs embedded Linux as operating system and the method described in Fig. 3 (User activity monitoring) is implemented as an application developed using the C programming language, henceforth the URL monitor. The application uses the C library **lipcap** to collect packets and **libcurl** to send URL information to the backend server via XML messages. This embodiment uses lipcap to filter packets that have destination port 80 and that are HTTP request, as these are relevant for extracting user activity information.

The URL monitor implements a method to collect and handle packets related to user activity, and it includes at least the following steps: (1) filter relevant packets according to the aforementioned conditions, (2) extract URL information from collected HTTP requests, (3) temporally store this data in the CPE, and generate XML messages with user activity to send to the backend server using **libcurl.** In this particular embodiment, the URL monitor can be started via the configuration manager of the CPE or directly in the operating system via a shell script. Both options can pass the required configuration parameters to the C application that then runs as a background process in the CPE, i.e. daemon.

This embodiment of the invention considers some robustness aspects that are mentioned next: when the PPPoE connection breaks, the CPE configuration management calls the correspondent shell script to end the URL monitor, as there is no more user activity to collect. In the same manner, when the PPPoE is established again, the configuration manager starts the URL monitor. The URL monitor also implements the following remote configuration options: PostURL, cut, and delay. This implementation follows the DSL forum standard TR-069 and there is a correspondent part implemented in the backend server.

Web page caching, in this embodiment of the invention, is implemented using tinyproxy as the proxy server. Tinyproxy is an open source implementation of a proxy server that has the following characteristics: compatibility with all commercial browsers, transparent to the user, small footprint, and it provides all functionality needed in this invention. To implement the method for embedding advertisements indicated generally Fig. 4, tinyproxy is preferably extended as follows:

The library is modified to parse the retrieve HTML pages and embed the advertisement HTML code in the appropriate place, located according to the method described in Fig. 4. Tinyproxy uses the **read_buffer** () function to read the incoming data from the ISP and the **write_buffer ()** to send this data to another socket. The modifications only affect the **read_buffer ()** function, as it parses the incoming HTML code.

In order to insert the code for advertisements, the method should find the correct place to do so in the incoming HTML code, **read_buffer ()**. The method to locate the insertion point is shown in Fig. 4. In this embodiment, this method is implemented as an extension to the tinyproxy, in particular to the **read_buffer** () function.

Also, the preferred embodiment of this invention includes an implementation of the method described in Figure 5 and this implementation preferably resides in the backend server. This method is implemented as an application developed, for example, in Java programming language, from this time forth the Advertisement controller. The CPE invokes the Advertisement controller and sends an XML message that contains user activity. The Advertisement controller implements at least the following methods to support the communication with the CPE, and the processing of received XML messages:
- **Process request** implements the method to parse the XML messages send by the CPE and extract the relevant information about user's activity.
- **Do get**: method to handle HTTP get request
- **Do post**: method to handle HTTP post request
- **Get XML:** handles the incoming XML messages from the CPE.

In this particular embodiment, the Advertisement controller contains seven Java classes in order to implement the method indicated generally in Fig. 5.

| System component (Fig. 5) | Component implemented by (Java classes name) |
|---|---|
| Advertisement controller | **OSSAdvertisementController**, implements communication between the CPE and backend server. It receives XML messages from the CPE, it parses the message, and it sends advertisement information back to the CPE. **AdvertisementDelegate**, instantiates and communicates with two components: AdvertisementParser and AdvertisementPlugin. **AdvertisementDAO,** concern with the communication to the local database in the backend server, which contains the CPE location data. It requests and retrieves the CPE location. |
| XML Parser | **AdvertisementParser,** implements the method to parse XML messages send by the CPE. |
| Content plug-in | **AdvertisementDTO**, implements parsing of the advertisement information coming from a content provider. In order to collect and parser the advertisements, it communicates with the AdvertisementPlugin. **AdvertisementPlugin,** implements the communication with a content provider, it deals with the content provider specific format for requesting and retrieving content. The AdvertisementPlugin is the one to formulate the content request based on user activity and CPE location. |
| Advertisement store | **AdvertisementStore**, implements a structure to store advertisements and send this data back to the CPE to be embedded in the user requested web pages. |

## Claims

1. A method for embedding content in web pages, comprising the steps of:
a. capturing a user's web page request; by an access device;
b. determining the user's activity on the basis of the requested web page;
c. retrieving from a backend additional content matching with the content of the user web request; and
d. embedding the retrieved additional content into the code of the requested web pages.

2. The method of claim 1, wherein step b) comprises b1) capturing incoming packets, and b2) extracting relevant identification information from the packets.

3. The method of claim 2, wherein step b1) comprises capturing incoming HTTP packets or packets.

4. The method of claim 2 or 3, wherein step b2) comprises
b21) scanning packets for specific protocol tags; and
b22) collecting activity identification information contained in packets containing the specific protocol tags.

5. The method of claim 4, further comprising the step b23) sending the collected identification information to a backend server.

6. The method of claim 5, wherein collected identification information is periodically sent to the backend server.

7. The method of claim 5 or 6, wherein the collected identification information is sent in form of a XML message.

8. The method of any of the preceding claims, wherein the identification information is related to the accessed URL of the web pages retrieved by the user.

9. The method of claim 8, wherein the information is the URL, the IP address, or keywords part of the URL.

10. The method of any of the preceding claims, wherein step d) comprises the step of locating in the HTML code of the requested page a point where the content is to be embedded.

11. The method of claim 10, wherein the locating step uses a parsing method parsing the HTML code.

12. The method of any of the preceding claims, wherein the content embedded in step d) is retrieved from a content provider providing said additional content.

13. The method of claim12, wherein the additional content provider is different from the content provider providing the web pages requested by the user.

14. The method of any of claims 10 to 13, wherein the content to be embedded is embedded at a point between the opening and the closing tags of the HTML code.

15. The method of claim 14, wherein the content is embedded immediately after the opening tag.

16. The method of any of the preceding claims, further comprising the step of distributing the requested web page with embedded content to the user.

17. The method of any of the preceding claims, wherein the content to be embedded is individually selected on the basis of the determined user activity.

18. The method of claim 17, wherein the content to be embedded is individually selected on the basis of the determined user activity and/or user location.

19. The method of claim 18, wherein the router location is stored in a backend server database.

20. The method of any of the preceding claims, wherein the content to be embedded is additional content such as an advertisement.

21. Computer system for embedding content in web pages, the system comprising a central station connectable to a plurality of mobile terminals, a backend server, and a content provider providing the content to be embedded, the central station comprising means for capturing a user's web page request from at least on of the plurality of mobile terminals; means for determining the user's activity on the basis of the requested web page, means for retrieving from a backend additional content matching with the content of the user web request, and means for embedding the retrieved additional content into the code of the requested web pages, the content being provided by the content provider on the basis of the determined user activity.

22. The computer system of claim 21, wherein the determining means is adapted to capture incoming packets, and to extract relevant identification information from the packets.

23. The computer system of claim 22, wherein the capturing comprises capturing incoming HTTP packets or packets.

24. The computer system of claim 23, wherein the central station is adapted to scan packets for specific protocol tags; and to collect activity identification information contained in packets containing the specific protocol tags.

25. The computer system of claim 24, wherein the central station is adapted to send the collected identification information to a backend server.

26. The computer system of any of claims 21 to 25, wherein the identification information is related to the accessed URL.

27. The computer system of any of claims 21 to 26, wherein the embedding means is adapted to locate in the HTML code of the requested page a point where the content is to be embedded.

28. The computer system of any of claims 21 to 27, wherein the content embedded is retrieved from a content provider by the backend server.

29. The computer system of claim 28, wherein the content to be embedded is individually selected on the basis of the determined user activity.

30. The computer system of claim 28, wherein the content to be embedded is individually selected on the basis of the determined user activity and/or user location.

31. The computer system of any of claims 21 to 30, wherein the central station compromises a transparent proxy.

32. The computer system of claim 31, wherein the central station is or is directly connected to an Internet gateway, preferably a DSL router or a cable modem.

33. Central station in a computer system, the central station comprising means for receiving a user's web page request from at least on of the plurality of mobile terminals; means for determining the user's activity on the basis of the requested web page, means for caching web pages requested by the user and provided by a backend server to which the central station is connectable, and means for embedding content into the code of the requested web pages, the content being provided by a content provider on the basis of the determined user activity.
